# EUROPÄISCHE PATENTSCHRIFT

(11) **EP 2 169 899 B1**
(45) Veröffentlichungstag und Bekanntmachung des Hinweises auf die Patenterteilung: **05.11.2014**
(21) Anmeldenummer: 08165132.5
(22) Anmeldetag: 25.09.2008
(51) Int. Cl.: H04L 29/06

(54) **System und ein Verfahren zur Erkennung von verteilten Dienstverweigerungsangriffen**
Method and system for determining distributed denial of service attacks
Système et procédé de reconnaissance d'attaques par déni de service distribué

(43) Veröffentlichungstag der Anmeldung: 31.03.2010
(73) Patentinhaber: Deutsche Telekom AG, 53113 Bonn (DE)
(72) Erfinder: Roshandel, Mehran, 13591 Berlin (DE); Zseby, Tanja, 10999 Berlin (DE); Hirsch, Thomas, 10559 Berlin (DE)
(74) Vertreter: Vossius & Partner

(56) Entgegenhaltungen:
- US-A1- 2004 049 693
- US-B1- 6 477 651
- THOMAS GAMER ET AL: "Distack -- A Framework for Anomaly-Based Large-Scale Attack Detection" EMERGING SECURITY INFORMATION, SYSTEMS AND TECHNOLOGIES, 2008. SECURWARE '08. SECOND INTERNATIONAL CONFERENCE ON, IEEE, PISCATAWAY, NJ, USA, 25. August 2008 (2008-08-25), Seiten 34-40, XP031319466 ISBN: 978-0-7695-3329-2

## Beschreibung

Die vorliegende Erfindung betrifft ein System und ein Verfahren zur Erkennung von verteilten Dienstverweigerungsangriffen über ein paketbasiertes Netzwerk, insbesondere zur flexiblen Echtzeit Erweiterung von Messvorrichtung des Systems durch eine Metrikdefinition zur Anpassung an Verteilte Dienstverweigerungsangriffe.

### Technischer Hintergrund

Angriffe auf Computersysteme über das Internet können im wesentlichen in zwei grundsätzliche Angriffsarten unterteilt werden, nämlich das Eindringen in Serversysteme und Manipulieren der Dienste; und die Dienstverweigerung (Denial of Service, kurz: DoS) durch Generierung von sinnlosen bzw. automatischen Anfragen, d.h. Überlastangriffe.

Überlastangriffe können auf verschiedene Ziel-Ressourcen angewendet werden. Neben der Überlastung der Netz-Infrastruktur sowie Router, Bandbreite werden auch Angriffe auf Applikationen beobachtet. Sehr viele automatisch generierte Anfragen führen so meist zu einer Überlastung der Dienste, wodurch sie für normale Benutzer nicht mehr verfügbar sind, d.h. eine Dienstverweigerung tritt ein. Die automatische Generierung dieser Anfragen wird in der Regel von vielen gekaperten Rechnern, insbesondere von Virus infizierten Rechnern ohne Wissen derer Besitzer übernommen, so dass diese Art von Angriffen verteilte Dienstverweigerungsangriffe (Distributed Denial of Service, Abk.: DDoS) genannt wird.

Systeme zur Erkennung von Angriffen über das Netzwerk sind als Intrusion Detection System (IDS) oder Anomaly Detection System (ADS) bekannt. Sie erkennen Angriffe respektive anhand von charakteristischen Mustern (bei IDS), beziehungsweise anhand von Abweichungen zu einem Normalzustand (bei ADS)

Da der menschliche Angreifer erkennt, ob der Angriff erfolgreich war, wird er die verwendeten Techniken ständig variieren, so lange er erfolgreich abgewehrt wird. Daher muss auch die Verteidigungsstrategie ständig an die Rahmenbedingungen angepasst werden. Auch die reguläre Nutzung der zu schützenden Dienste ist im ständigen Wandel.

Die Abwehr dieser Angriffe setzt also ein Meßsystem voraus, das durch eine Steuerungseinheit ständig an die neuen Bedürfnisse angepasst werden kann. Neue Phänomene können dann durch charakteristische Metriken beschrieben und erkannt werden.

Herkömmliche reinen Meßsysteme bzw. Messvorrichtungen und Messkomponenten von ADS und IDS haben keine solche Funktionalität. Einige Messvorrichtungen im Stand der Technik sind zum Beispiel: IBM Aurora™, Lucent VitalSuite™, CA Spectrum™. Beispielhafte IDS sind: Cisco Anomaly Detector™ mit Cisco Guard™ und Radware DefensePro™. Die gängigsten Metriken werden als Komponenten des Meßsystems programmiert und können bei Bedarf eingesetzt werden. Neue Metriken können nicht definiert und in Echtzeit zur Messvorrichtung übertragen werden. Wenn der Hersteller eine neue Metrik bereitstellt, ist eine Abstellzeit des gesamten Systems notwendig, um die neue Metrik ins System zu integrieren.

US-B-6785818 und US-A-20070094730 beschreiben eine Erkennung von Registry Mapping-Angriffen bzw. Computerwürmern. Diese Art der Angriffe findet auf einer anderen Ebene, nämlich durch Ausnutzung von Sicherheitslücken in einem System oder einem Netzwerk des Angegriffenen statt. Üblicherweise erfolgt eine Suche nach Schad-"Signaturen", also charakteristischen Mustern im Paketinhalt, so wie das von Virenscannern bekannt ist. Der Angriff zielt auch nicht primär auf die Dienstblockade ab, sondern darauf, Systeme unter Kontrolle zu bringen.

Ein DDoS-Angriff, der nur auf der Überlastung von Ressourcen basiert, kann hingegen auch gegen vollständig sichere Systeme gestartet werden. Er basiert alleine auf der Masse der Anfragen. DDoS-Angriffe unterscheiden sich vor allem im Ziel - einfachere Angriffe verstopfen die Netzwerkleitung mit Paketen, Ressource: Bandbreite. Komplexere Angriffe verursachen z.B. viele rechenintensive Datenbankabfragen auf Webseiten, um CPU oder Speicher zu überlasten.

Gemein ist diesen Angriffen, dass sie anhand charakteristischer Muster und Phänomene im Netzwerk bereits erkannt werden können. Dies geschieht entweder durch Erkennen bekannter Muster (IDS), oder Abweichung von normalen Mustern (ADS).

US-A-20060242705 beschreibt ein ADS zur Erkennung von Würmern. Es wird im eigenen Netzwerk nach Schädlingen gesucht, also kein Angriff von außen - am Inbound Link - abgewehrt. Das Verfahren beschreibt ein komplettes System zur Erkennung und Abwehr der Würmer, mit konkreten Messverfahren. Eine Anpassung der Metriken an neue Wurmtypen wird jedoch nicht vorgeschlagen.

Bei den oben genannten Cisco Systemen beschreibt der so genannte Multiverification-Process ein mehrstufiges Verfahren mit konkreten Maßnahmen, z.B. Source Verification: Absender von Paketen werden durch einfache Gegenabfragen verifiziert. Eine Anpassung des Schemas ist dort auch nicht vorgesehen.

In der Veröffentlichung von Thomas Gamer et al: "Distack - A Framework for Anomaly-Based Large Scale Attack Detection, "EMERGENCY SECURTIY INFORMATION, SYSTEMS AND TECHNOLOGIES, 2008, SECUWARE '08. SECOND INTERNATIONAL CONFERENCE ON, IEEE wird eine Struktur zur Erkennung von Angriffen beschrieben, die die Integration verschiedener Erkennungsverfahren in Form von Modulen erlaubt.

Die US 6,477,651 B1 betrifft ein System und ein Verfahren zum Erkennen von nicht autorisierter oder böswilliger Verwendung von Netzwerkressourcen.

### Zusammenfassung der Erfindung

Der Erfindung liegt die Aufgabe zugrunde, ein verbessertes System und Verfahren zur Erkennung von verteilten Dienstverweigerungsangriffen über ein paketbasiertes Netzwerk bereitzustellen, welches eine dynamische Metrikdefinition zur flexiblen Echtzeit Erweiterung von Messvorrichtung des Systems erlaubt, wodurch eine dynamische Anpassung an verteilte Dienstverweigerungsangriffe ermöglicht wird.

Diese Aufgabe wird anhand des Gegenstandes der Patentansprüche gelöst.

Die vorliegende Erfindung betrifft ein Verfahren zur Erkennung von verteilten Dienstverweigerungsangriffen über ein paketbasiertes Netzwerk gemäß Anspruch 1 und ein System zur Erkennung von verteilten Dienstverweigerungsangriffen über ein paketbasiertes Netzwerk gemäß Anspruch 6.
Die abhangigen Ansprüche betreffen bevorzugte Ausführungsformen der Erfindung.

Das Verfahren nach der vorliegenden Erfindung ermöglicht durch Verwendung von Skriptsprachen zur Metrikdefinition die Erweiterung des Meßsystems mit geringen Programmierkenntnissen und die Definition von neuer Metrik. Dadurch kann die neue Metrik während der Laufzeit des Systems ohne Neustart übertragen und im Betrieb aufgenommen werden. Die neue Metrik, d.h. eine erweiterte Metrik kann entweder die bestehende Grundmetrik ersetzen oder erweitern. Mit anderen Worten kann die Metrik in dem System nach vorliegende Erfindung dynamisch erweitertet bzw. geändert werden. Somit kann die Messvorrichtung des Systems dynamisch an neue Aufgaben angepasst werden, d.h. das System kann an ständig wechselnde Angriffsstrukturen in Echtzeit angepasst werden. Eine Abstellzeit des Systems zum Rekonfigurieren der Metrik kann daher vermieden werden.

### Beschreibung der Figuren

Im folgenden wird die Erfindung anhand der beigefügten Zeichnungen näher beschrieben. Es zeigen:
- Fig. 1: eine schematische Darstellung der Funktionsweise des Systems nach einer bevorzugten Ausführungsform der vorliegenden Erfindung; und
- Fig. 2: einen beispielhaften Ablauf zur Anpassung der Metrik in der Messvorrichtung.

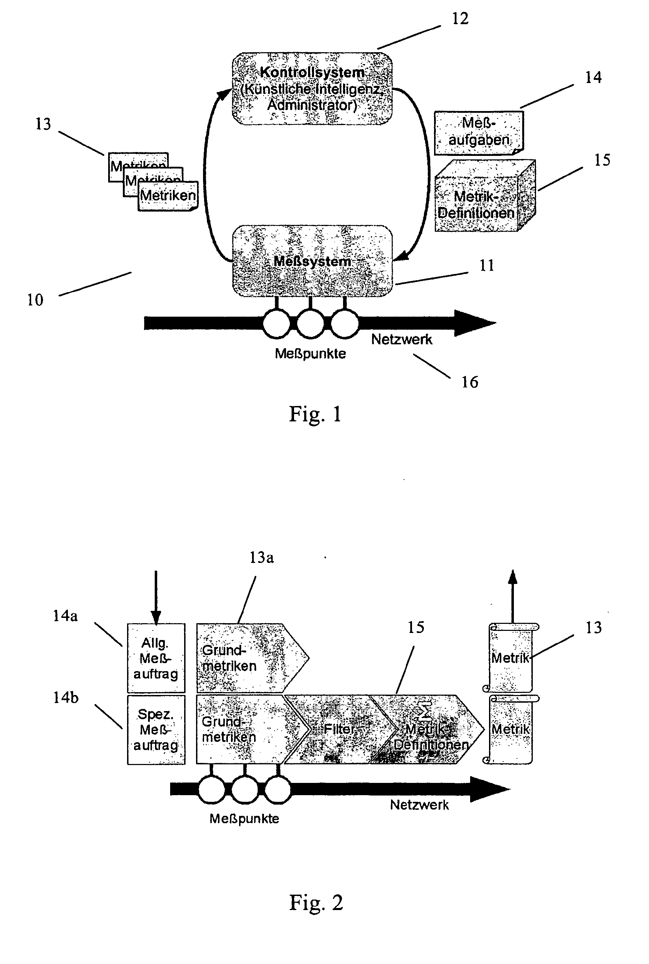

In folgenden wird das Verfahren zur Erkennung von verteilten Dienstverweigerungsangriffen über ein paketbasiertes Netzwerk gemäß einer bevorzugten Ausführungsform anhand von Fig. 1 und 2 beschrieben.

Die Erfindung beschreibt ein Verfahren zur Rekonfiguration eines Meßsystems bzw. Messvorrichtung 11, das dadurch in der Lage ist, neue charakteristische Metriken 13 während der Laufzeit entgegenzunehmen und im laufenden Betrieb zu berechnen. Eine Metrikdefinition 15 erfolgt durch kurze Programmmodule in einer interpretierten Skriptsprache.

Fig. 1 zeigt eine schematische Darstellung der Funktionsweise des Systems 10 nach einer bevorzugten Ausführungsform der vorliegenden Erfindung. Das Meßsystem bzw. die Messvorrichtung 11 wird hierzu von dem Kontrollsystem bzw. der Steuervorrichtung 12 eines IDS 10 angesteuert, das die eigentliche Angriffserkennung betreibt und dem Meßsystem 11 Aufgaben 14 zuteilt. Eine Messaufgabe 14 ist z.B. die Aufforderung "Miss 10 Minuten lang die Paketgrößen und führe die vorhandene Metrik 'Mittelwert über alle Paketgrößen' aus...".

Sobald das IDS 10 eine Änderungen in der Angriffsstruktur automatisch oder durch Eingriff eines Administrators erkannt und charakterisiert hat, erstellt es eine Metrikdefinition 15 in Skriptsprache. Die Metrikdefinition 15 wird vom Kontrollsystem 12 auf dem Meßsystem 11 hinterlegt. Da eine Skriptsprache von einem im Programm vorhandenen Interpreter zur Laufzeit verarbeitet wird, ist es nicht nötig, das Modul zu übersetzen, oder das System 10 anschließend neu zu starten.

Dank eines Interpreters für die Skriptsprache ist das Meßsystem 11 nun in der Lage, die Definition 15 sofort im laufenden Betrieb zu verwenden. Dazu wird vom Kontrollsystem 12 eine neue Aufgabe 14 definiert, welche die neue Metrik 13 referenziert. Das Meßsystem erhebt die in der Aufgabendefinition 14 beschriebenen Daten und führt anschließend das Metrikmodul aus, um die Metriken 13 zu berechnen.

Eine solche Neudefinition von Metriken kann zum Beispiel im Angriffsfall erfolgen. Fig. 2 zeigt einen beispielhaften Ablauf zur Anpassung der Metriken 13 in der Messvorrichtung 11. Im Normalzustand überwacht ein IDS den Netzwerkverkehr 16 aus Ressourcengründen nur mit einer groben Auflösung - der Grundmetrik 13a. Wird nun erkannt, dass ein Angriff stattfindet, können die bisher gesammelten Daten nicht ausreichen. Das IDS 10 kann herausfinden, über welche Schnittstellen der Angriff das Netz erreicht, und welche Teile des Netzwerks 16 betroffen sind. Außerdem können genauere Informationen über die Art des Angriffs Hinweise auf die Bekämpfung oder den Urheber liefern.

Erkennt das IDS 10 also einen Angriff, können dann eine Reihe von neuen Messaufträgen 14a, 14b vergeben werden. Hierbei kann - wenn der Angriffstyp neuartig ist - nicht nach einem festen Schema vorgegangen werden. Neue Metrikdefinitionen können bestimmte Kopfdaten oder Nutzdaten aus den Datenpaketen extrahieren, die Messung auf bestimmte Netzwerksegmente, Quellen oder Pakettypen einschränken, und beliebige mathematische Funktionen auf diesen Daten ausführen.

Erkennt das IDS 10 z.B., dass Schadverkehr besonders oft auf einen bestimmten Port zugreift, so kann gezielt nur der Verkehr auf dieser Portnummer überwacht werden, und spezielle statistische Daten, wie Gesamtverkehr, Verteilungen oder Abweichungen erzeugt werden. Registriert das IDS eine Häufung von bestimmten Mustern, so kann speziell eine Routine eingefügt werden, die auf den bestehenden Daten dieses Muster erkennt, und die Häufung des Auftretens dieses Musters meldet.

Wie oben beschrieben kann die Grundmetrik 13a und/oder Metrikdefinition 15 im IDS 10 beim Bedarf erweitertet werden, indem die Grundmetrikl3a durch die erweiterten Metrik 13 erweitert wird. Wahlweise kann die Grundmetrik 13a und/oder Metrikdefinition 15 im IDS 10 auch durch die neue Metrik, d.h. erweiterte Metrik 13 bzw. Metrikdefinition 15 jeweils ersetzt werden, wobei die erweiterte Metrik als gesamte Metrik im IDS 10 dienen wird. In beiden Fällen kann die Metrik bzw. die Metrikdefinition in IDS 10 global gesehen dynamisch verändert werden, wodurch eine dynamische Anpassung des IDS 10 an ständig wechselnde Angriffsstrukturen in Echtzeit ermöglicht wird. Eine Abstellzeit des IDS 10 kann dadurch vermieden werden.

Die Erfindung umfasst ebenfalls einzelne Merkmale in den Figuren, auch wenn sie dort im Zusammenhang mit anderen Merkmalen gezeigt sind und/oder vorstehend oder nachfolgend nicht genannt sind.

Die Erfindung umfasst ebenfalls Ausführungsformen mit jeglicher Kombination von Merkmalen, die vorstehend oder nachfolgend zu verschiedenen Ausführungsformen genannt oder gezeigt sind.

## Patentansprüche

1. Verfahren zur Erkennung von verteilten Dienstverweigerungsangriffen über ein paketbasiertes Netzwerk (16) mit den Schritten Überwachen des Netzwerkes (16) mit einer Messvorrichtung (11), die mit mindestens einer dynamisch definierbaren Metrik konfiguriert ist; und Steuern der Messvorrichtung (11) und Erkennen der Angriffe mit einer Steuervorrichtung (12),
wobei das Verfahren ferner die Schritte aufweist
Überwachen des Netzwerks (16) mit einer Grundmetrik (13a); wenn eine Änderung in den verteilten Dienstverweigerungsangriffen erkannt wird:
Festlegen mindestens einer neuen Überwachungsaufgabe (14b) mit der Steuervorrichtung (12) zur Annassiing der Messvorrichtung (11) an die erkannte Änderung; **gekennzeichnet durch**
Bereitstellen einer Metrikdefinition (15) in einer Skriptsprache für eine erweiterte Metrik (13) mit der Steuervorrichtung (12) zur Erfüllung der neuen Überwachungsaufgabe (14b);
Hinterlegen der Metrikdefinition (15) von der Steuervorrichtung (12) auf der Messvorrichtung (11); und
Interpretieren der erweiterten Metrik (13) auf Basis der Metrikdefinition (15) mit der Messvorrichtung (11).

2. Verfahren nach Anspruch 1, wobei die erweiterte Metrik (13) die Grundmetrik (13a) ersetzt.

3. Verfahren nach Anspruch 1 oder 2, wobei die Metrikdefinition (15) bestimmte Kopfdaten und/oder Nutzdaten aus Datenpaketen in dem Netzwerk (16) aufweist.

4. Verfahren nach Anspruch 3, wobei die Überwachung mit der Messvorrichtung (11) auf Parameter sowie Netzwerksegment, Quellen und/oder Pakettypen definiert ist.

5. Verfahren nach Anspruch 3 oder 4, wobei eine mathematische Funktion auf die Datenpakete ausgeführt wird.

6. System zur Erkennung von verteilten Dienstverweigerungsangriffen über ein paketbasiertes Netzwerk (16) mit:
einer Messvorrichtung (11) zur Überwachung des Netzwerkes (16);
einer Einrichtung mit einer Metrik zur Konfiguration der Messvorrichtung (11), wobei die Metrik dynamsich an die verteilten Dienstverweigerungsangriffe anpassbar ist; und
einer mit der Messvorrichtung (11) verbundenen Steuervorrichtung (12) zum Steuern der Messvorrichtung (11) und zum Durchführen der Erkennung der verteilten Dienstverweigerungsangriffe;
wobei das System konfiguriert ist zum
Überwachen des Netzwerks (16) mit einer Grundmetrik (13a);
wenn eine Änderung in den verteilten Dienstverweigerungsangriffen erkannt wird,
Festlegen mindestens einer neuen IUberwachungsaufgabe (14b) mit der Steuervorrichtung (12) zur Anpassung der Messvorrichtung (11) an die erkannte Änderung: **gekennzeichnet durch**
Bereitstellen einer Metrikdefinition (15) in einer Skriptsprache für eine erweiterte Metrik (13) mit der Steuervorrichtung (12) zur Erfüllung der neuen Überwachungsaufgabe (14b);
Hinterlegen der Metrikdefinition (15) von der Steuervorrichtung (12) auf der Messvorrichtung (11); und
Interpretieren der erweiterten Metrik (13) auf Basis der Metrikdefinition (15) mit der Messvorrichtung (11).

## Claims

1. Method for detecting distributed denial of service attacks via a packet-based network (16), comprising the steps of: monitoring the network (16) using a measuring device (11) which is configured with at least one dynamically definable metric; and controlling the measuring device (11) and detecting the attacks using a control device (12),
said method further comprising the steps of:
monitoring the network (16) by means of a base metric (13a);
when a change in the distributed denial of the service attacks is detected:
defining at least one new monitoring task (14b) using the control device (12) for adapting the measuring device (11) to the detected change;
**characterized by**:
providing a metric definition (15) in a script language for an amplified metric (13) using the control device (12) for executing the new monitoring task (14b);
entering the metric definition (15) from the control device (12) into the measuring device (11); and
interpreting the amplified metric (13) based on the metric definition (15) using the measuring device (11).

2. Method according to claim 1, wherein the amplified metric (13) replaces the base metric (13a).

3. Method according to claim 1 or 2, wherein the metric definition (15) comprises specific header data and/or user data from data packets in the network (16).

4. Method according to claim 3, wherein the monitoring using the measuring device (11) is defined for parameters as well as network segment, sources and/or packet types.

5. Method according to claim 3 or 4, wherein a mathematical function is executed on the data packets.

6. System for detecting distributed denial of service attacks via a packet-based network (16), comprising:
a measuring device (11) for monitoring the network (16);
a device having a metric for the configuration of the measuring device (11), wherein said metric is dynamically adaptable to the distributed denial of service attacks; and
a control device (12) connected to the measuring device (11) for controlling the measuring device (11) and executing detection of the distributed denial of service attacks;
which system is configured for
monitoring the network (16) using a base metric (13a);
when a change in the distributed denial of service attacks is detected:
defining at least one new monitoring task (14b) using the control device (12) for adapting the measuring device (11) to the detected change:
**characterized by**
providing a metric definition (15) in a script language for an amplified metric (13) using the control device (12) for executing the new monitoring task (14b);
entering the metric definition (15) from the control device (12) into the measuring device (11); and
interpreting the amplified metric (13) based on the metric definition (15) using the measuring device (11).

## Revendications

1. Procédé de détection d'attaques par déni de service réparties sur un réseau à base de paquets (16), comprenant les étapes de surveillance du réseau (16) par un dispositif de mesure (11) configuré avec au moins une métrique définissable de manière dynamique ; et la commande du dispositif de mesure (11) et la détection des attaques par un dispositif de commande (12),
ledit procédé comprenant en outre les étapes
de surveillance du réseau (16) par une métrique de base (13a) ;
si une modification est détectée dans les attaques par déni de service réparties :
définition d'au moins une nouvelle tâche de surveillance (14b) par le dispositif de commande (12) afin d'adapter le dispositif de mesure (11) à la modification détectée ;
**caractérisé par**
la mise à disposition d'une définition de métrique (15) dans un langage script pour une métrique étendue (13) par le dispositif de commande (12) pour remplir la nouvelle tâche de surveillance (14b) ;
la mémorisation de la définition de métrique (15) dans le dispositif de mesure (11) par le dispositif de commande (12) ; et
l'interprétation de la métrique étendue (13) sur la base de la définition de métrique (15) par le dispositif de mesure (11).

2. Procédé selon la revendication 1, où la métrique étendue (13) se substitue à la métrique de base (13a).

3. Procédé selon la revendication 1 ou la revendication 2, où la définition de métrique (15) comporte des données d'en-tête définies et/ou des données utiles de paquets de données dans le réseau (16).

4. Procédé selon la revendication 3, où la surveillance par le dispositif de mesure (11) est définie par des paramètres ainsi que par segment de réseau, sources et/ou types de paquets.

5. Procédé selon la revendication 3 ou la revendication 4, où une fonction mathématique est exécutée sur les paquets de données.

6. Système pour la détection d'attaques par déni de service réparties sur un réseau à base de paquets (16), comportant :
un dispositif de mesure (11) pour surveiller le réseau (16) ;
un dispositif avec une métrique pour la configuration du dispositif de mesure (11), la métrique pouvant être dynamiquement ajustée aux attaques par déni de service réparties ; et
un dispositif de commande (12) relié au dispositif de mesure (11) pour commander ledit dispositif de mesure (11) et pour exécuter la détection des attaques par déni de service réparties ;
le système étant configuré pour
surveiller le réseau (16) par une métrique de base (13a) ;
si une modification est détectée dans les attaques par déni de service réparties :
définir au moins une nouvelle tâche de surveillance (14b) par le dispositif de commande (12) afin d'adapter le dispositif de mesure (11) à la modification détectée ;
**caractérisé par**
la mise à disposition d'une définition de métrique (15) dans un langage script pour une métrique étendue (13) par le dispositif de commande (12) pour remplir la nouvelle tâche de surveillance ( 14b) ;
la mémorisation de la définition de métrique (15) dans le dispositif de mesure (11) par le dispositif de commande (12) ; et
l'interprétation de la métrique étendue (13) sur la base de là définition de métrique (15) par le dispositif de mesure (11).
